# EUROPEAN PATENT APPLICATION

(11) **EP 1 376 942 A1**
(43) Date of publication of application: **02.01.2004**
(21) Application number: 02702802.6
(22) Date of filing: 07.03.2002
(51) Int. Cl.: H04L 12/46

(54) **ROUTER APPARATUS AND BAND CONTROL METHOD THEREOF**

(30) Priority: 14.03.2001 JP 2001071366
(71) Applicant: NEC Corporation, Minato-ku, Tokyo 108-0014 (JP)
(72) Inventor: MIYASHITA, Shigehiro, Minato-ku, Tokyo 108-0014 (JP)
(74) Representative: Glawe. Delfs. Moll
(86) International application number: PCT/JP2002/002126
(87) International publication number: WO 2002/078270

(57) **Abstract**

The present invention relates to a router apparatus and a bandwidth controlling method thereof. An object of the present invention is to provide a router apparatus which allows a network connection bandwidth to be equally used by a plurality of clients without need to perform a special bandwidth acquisition procedure. A router apparatus according to the present invention is a router apparatus for controlling a bandwidth, said router apparatus being disposed between a network and a plurality of clients under an environment in which the bandwidth for connection with a network is shared by a plurality of clients, said router apparatus comprising: address management means for assigning an address to a client in response to a network connection request issued from the client; and bandwidth management means for reassigning the bandwidth to the assigned address and addresses assigned to the other clients.

## Description

### Technical Field

The present invention relates to a router apparatus and a bandwidth controlling method thereof, in particular, to a router apparatus and a bandwidth controlling method for controlling a bandwidth which is shared by a plurality of clients, wherein the bandwidth is provided for connection to a network and the router apparatus disposed between the network and the plurality of clients.

### Background Art

Recently, as the Internet connecting environment has advanced, communication systems which are always connected to the Internet have been increased in SOHOs (Small Office, Home Office) and collective housings such as apartment houses. In these environments, a plurality of Internet clients (mainly, personal computers (hereinafter referred to as PCs) and so forth) are connected to a LAN (Local Area Network). The LAN is connected to a router which is connected to the Internet service provider or the like, whereby each client can be connected to the Internet.

### Disclosure of Invention

In such an environment, a bandwidth assigned between the Internet service provider and the router is shared by a plurality of clients. However, due to the characteristic of the Internet protocol, when one client has been connected to the Internet, the client consumes a particular bandwidth. In the state, when another client tries to be connected to the Internet, a problem that a sufficient bandwidth is not assigned to the latter client will arise.

Japanese Patent Laid-Open Publication No. 2000-209272 titled "Network Resource Adjustment System" discloses a technology in which when the consumption amount of a network connection bandwidth as a network resource varies and a vacant bandwidth arises in the network, the vacant bandwidth is reassigned to hosts which continue to use the bandwidth. However, according to this technology, a procedure different from a usual procedure for securing a bandwidth is required between the hosts and the router. Thus, this technology cannot be applied to the conventional popular client apparatuses such as PCs.

The present invention has been made to solve the problem of the related art. An object of the present invention is to provide a router apparatus and a bandwidth controlling method thereof which allow a network connection bandwidth to be equally shared by a plurality of clients without need to perform a special bandwidth acquisition procedure.

Another object of the present invention is to provide a router apparatus and a bandwidth controlling method thereof which allow a network connection bandwidth to be equally shared and used by conventional client apparatuses such as PCs.

According to the present invention, there is provided a router apparatus for controlling a bandwidth, said router apparatus being disposed between a network and a plurality of clients under an environment in which the bandwidth for connection with a network is shared by a plurality of clients, said router apparatus comprising: address management means for assigning an address to a client in response to a network connection request issued from the client; and bandwidth management means for reassigning the bandwidth to the assigned address and addresses assigned to the other clients.

The bandwidth management means may adopt a bandwidth reassigning method which equally assigns the bandwidth. In addition, the bandwidth management means may adopt a bandwidth reassigning method which reassign the bandwidth in accordance with a prescribed priority. Further, the network may be the Internet, and the address management means may use private IP addresses as addresses assigned to the clients, and the bandwidth management means may have an address translation table for bi-directionally translating the private IP addresses and Internet's global IP addresses.

The network may be the Internet, and the bandwidth management means may assign different bandwidths to different Internet applications. Specifically, the bandwidth management means may assign different bandwidths to different port numbers through which communication data packets pass.

According to the present invention, there is provided a bandwidth controlling method in a router apparatus for controlling a bandwidth, said router apparatus being disposed between a network and a plurality of clients under an environment in which the bandwidth for connection with a network is shared by a plurality of clients, said method comprising: address management step for assigning an address to a client in response to a network connection request issued from the client; and bandwidth management step for reassigning the bandwidth to the assigned address and addresses assigned to the other clients.

The bandwidth management step may adopt a bandwidth reassigning method which equally assigns the bandwidth. In addition, the bandwidth management step may adopt a bandwidth reassigning method which reassign the bandwidth in accordance with a prescribed priority. Further, the network may be the Internet, and the address management step may use private IP addresses as addresses assigned to the clients, and the bandwidth management step may perform bandwidth control with reference to an address translation table for bi-directionally translating the private IP addresses and Internet's global IP addresses.

The network may be the Internet, and the bandwidth management step may assign different bandwidths to different Internet applications. Specifically, the bandwidth management step may assign different bandwidths to different port numbers through which communication data packets pass.

According to the present invention, there is provided a record medium on which a program is recorded for causing a computer to execute a bandwidth controlling method in a router apparatus for controlling a bandwidth, said router apparatus being disposed between a network and a plurality of clients under an environment in which the bandwidth for connection with a network is shared by a plurality of clients, said method comprising: address management step for assigning an address to a client in response to a network connection request issued from the client; and bandwidth management step for reassigning the bandwidth to the assigned address and addresses assigned to the other clients.

According to the present invention, in the environment in which a network connection bandwidth is shared by a plurality of clients, so that the bandwidth can be equally used by all the clients, not occupied by a part of the clients, a router apparatus lends addresses to the clients which use the bandwidth, reassigns the bandwidth to the addresses, and thereby equally acquires the bandwidth for all the clients while maintaining well-balanced relation.

According to the present invention, when a plurality of clients are connected to a network such as the Internet, a bandwidth can be very easily assigned to each client connected to the network without necessity of a special bandwidth acquisition procedure. Thus, as an effect of the present invention, unequalness in which the bandwidth is occupied by one client can be prevented. In addition, as another effect of the present invention, general-purpose PCs and so forth can be used as clients.

In addition, according to the present invention, with an NAT (Network Address Translator) transforming function, private IP addresses can be applied to clients. Thus, as an effect of the present invention, a global IP address resource can be effectively used.

In addition, according to the present invention, when priority is designated to clients and a bandwidth is assigned to the clients corresponding to the priority, the bandwidth not being equally assigned to the clients, as an effect of the present invention, the bandwidth can be managed corresponding to a special configuration. Alternatively, when different bandwidths are assigned corresponding to Internet applications identified by TCP/UDP port numbers, bandwidths can be assigned corresponding to data types of communication packets which pass through the bandwidths as another effect of the present invention.

### Brief Description of Drawings

Fig. 1 is a schematic diagram showing a structure of an outline of a system according to an embodiment of the present invention.
Fig. 2 is a block diagram showing a structure of a router according to the embodiment of the present invention.
Fig. 3 is a flow chart showing an operation when requesting an address assignment according to the embodiment of the present invention.
Fig. 4 is a flow chart showing an operation when requesting an address release according to the embodiment of the present invention.
Fig. 5 is a block diagram showing a structure of a router according to another embodiment of the present invention.

### Best Modes for Carrying out the Invention

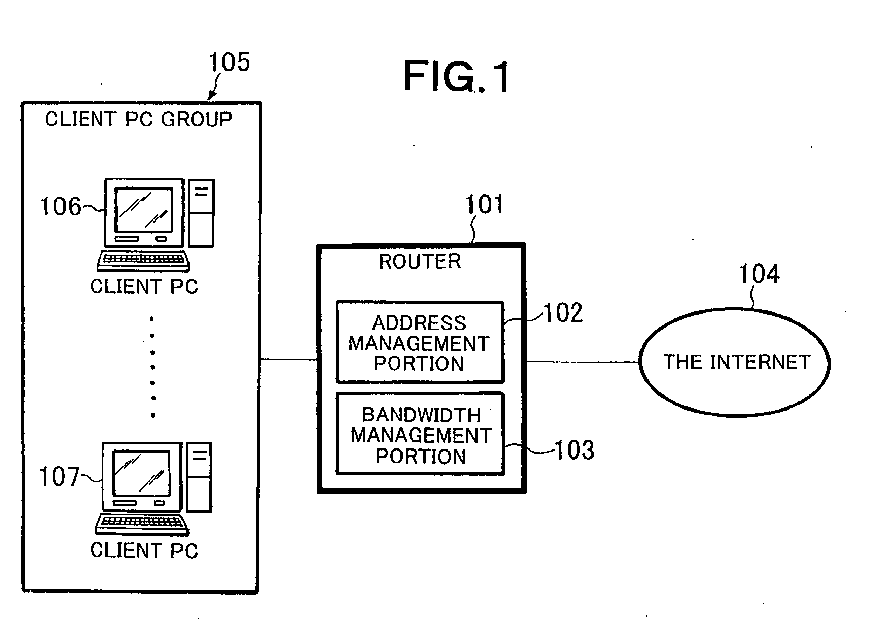

Next, with reference to the accompanying drawings, embodiments of the present invention will be described. Referring to Fig. 1, a first embodiment of the present invention comprises a router 101, an address management portion 102, a bandwidth management portion 103, the Internet 104, and a client PC group 105. The address management portion 102 and the bandwidth management portion 103 are implemented by a program which operates in the router 101. The client PC group 105 comprises a plurality of client PCs (in Fig. 1, a client PC 106 and a client PC 107).

The router 101 is a router apparatus which is connected to the Internet 104 using an Internet connection service provide by an Internet connection provider or the like and also to the client PC group 105 comprising a plurality of PCs disposed in a SOHO or a collective housing. The router 101 connects the Internet 104 and the client PC group 105.

The address management portion 102 basically operates as a server of the DHCP (Dynamic Host Configuration Protocol) protocol. The address management portion 102 lends IP addresses which the address management portion 102 pools in response to an IP address assignment requests which are issued by the client PC group 105 according to the DHCP protocol. In addition, the address management portion 102 sends a bandwidth assignment request for the addresses to the bandwidth management portion 103.

When the bandwidth management portion 103 connects the client PC group 105 to which the address management portion 102 has lent the IP addresses to the Internet 104, the bandwidth management portion 103 operates as a gateway to the Internet 104. At that point, the bandwidth management portion 103 acquires a required bandwidth. The Internet 104 is a large-scaled network which connects networks in the world.

The client PC group 105 is a group of personal computers which run an OS which has been widely used, Internet appliances, and so forth. The client PC group 105 is connected to the network 104 using the Internet protocol. In the example, it is assumed that the client PC 106 and the client PC 107 are PCs of the client PC group 105.

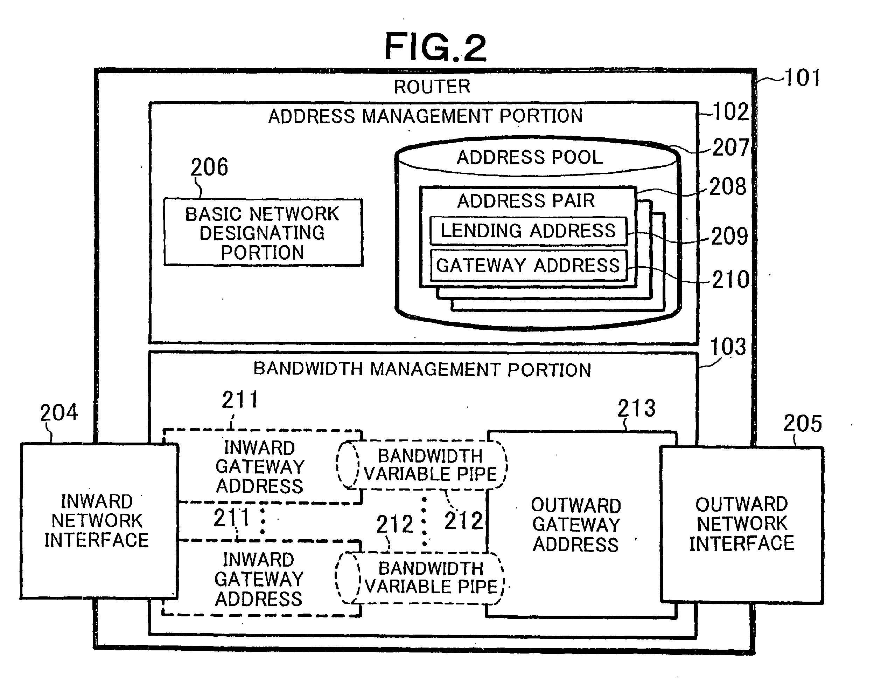

Next, with reference to Fig. 2, the internal structure of the router 101 as shown in Fig. 1 will be described in detail. The router 201 comprises two programs of the address management portion 102 and the bandwidth management portion 103, an inward network interface 204, and an outward network interface 205. The inward network interface 204 connects the router 101 to the client PC group 105 as shown in Fig. 1. The outward network interface 205 connects the router 101 to the Internet 104.

The address management portion 102 includes a basic network designating portion 206 and an address pool 207. Described in the basic network designating portion 206 is a network configuration which is commonly used by the client PC group 105. Described in the address pool 207 are IP addresses and so forth assigned to the client PC group 105. The address pool 207 stores address pairs 208 as many as the number of PCs of the client PC group 105 managed according to the DHCP. Each of the address pairs 208 comprises a lending address 209 and a gateway address 210 corresponding to the lending address 209.

The bandwidth management portion 103 comprises inward gateway addresses 211, bandwidth variable pipes 212, and an outward gateway address 213. The inward gateway addresses 211 are assigned to the inward network interface 204. The bandwidth of the bandwidth variable pipes 212 may be designated when IP packets pass through the bandwidth variable pipes 212. The outward gateway address 213 is assigned to the outward network interface 205. The inward gateway addresses 211 correspond to the gateway addresses 210 of the address pairs 208 notified from the address management portion 102. When the address management portion 102 lends or collects an address according to the DHCP, the address management portion 102 adds or deletes a value of a gateway address 210 to or from the inward network interface 204. Thus, different inward gateway addresses 211 are simultaneously assigned to the inward gateway address 211.

The bandwidth variable pipes 212 correspond to the inward gateway addresses 211 in one-to-one relation. The bandwidth variable pipes 212 connect the corresponding inward gateway addresses 211 and the outward gateway address 213. The bandwidth management portion 103 configures routings of the inward gateway addresses 211 and the outward gateway address 213 so as to assure the connections of the inward gateway addresses 211 and the outward gateway address 213 to the Internet.

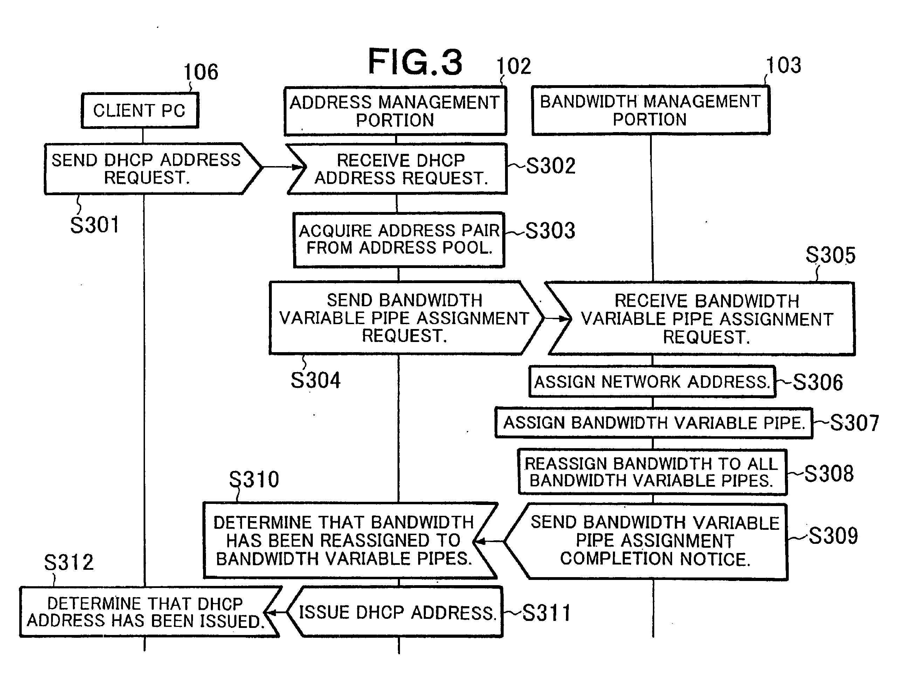

Next, with reference to Fig. 2 to Fig. 4, the operation of the embodiment will be described in detail. First of all, with reference to Fig. 2 and Fig. 3, an operation in which the router 101 assigns an IP address to the client PC 106 as shown in Fig. 1 according to the DHCP protocol will be described. In this case, it is assumed that the inward network interface 204 is a 100 BASE-TX (communication speed 100 Mbps) network interface and that the outward network interface 205 is an OCN (Open Computer Network) (communication speed 128 kbps).

When a terminal unit of the client PC group 105 communicates with the Internet 104, a bandwidth more than an assigned bandwidth (128 kbps) for the outward network interface 205 is not physically available. Thus, all the terminal units of the client group 105 share the bandwidth of 128 kbps. In the initial state, since any terminal unit of the client PC group 105 has not started, the bandwidth management portion 103 does not use the bandwidth variable pipes 212.

When a client PC 106 is started or going to be connected to the network, the client PC 106 sends an address request packet according to the DHCP protocol to the network so as to know network configuration information such as an IP address (at step S301).

As a basic operation of the DHCP server, the address management portion 102 always monitors a packet according to the DHCP protocol which has been sent to the network. The address management portion 102 receives the request packet, which has been sent at step S301 (at step S302). The address management portion 102 acquires an address pair 208 for the client PC 106 from the address pool 207 corresponding to the received packet (at step S303).

The address management portion 102 knows a lending address 209 to be assigned to the client PC 106 and a gateway address 210 to be assigned to the inward network interface 204 from the address pair 208, which has been acquired at step S303, and sends to the bandwidth management portion 103 a request to designate an inward gateway address 211 and a bandwidth variable pipe 212 with the addresses 209 and 210 as arguments (at step S304).

The bandwidth management portion 103 receives the request, which has been sent at step S304 (at step S305). The bandwidth management portion 103 assigns the gateway address 210 as the inward gateway address 211 to the inward network interface 204 (at step S306). Thereafter, the bandwidth management portion 103 acquires the bandwidth variable pipe 212 for the client PC 106 and connects the inward gateway address 211 and the outward gateway address 213 (at step S307).

The bandwidth variable pipe 212 performs a process for sending a packet which has been sent from the client PC 106 to the inward network interface (actually, an inward gateway address 211 assigned to the interface) to the outward gateway address 213 so as to send the packet toward the outward network interface 205 and vice versa. When a packet is sent outwardly or inwardly, the bandwidth is varied by a program. Therefore, the pipes 212 are referred to as bandwidth variable pipes.

When only one client PC 106 has been started, there is no bandwidth variable pipes 212 assigned to other client PCs. Therefore, a process for reassigning the bandwidth to all the bandwidth variable pipes at step S308 is skipped. At that point, instead, a process for sending a bandwidth variable pipe assignment completion notice is started at step S309. On the other hand, when there is a bandwidth variable pipe 212 assigned to the client PC 107, it is necessary to reassign the bandwidth to the bandwidth variable pipes 212 which have been assigned to client PCs. Thus, the process for reassigning the bandwidth to all the bandwidth variable pipes is started at step S308. In the example, since the bandwidth of 128 kbps is shared by two client PCs, each of the bandwidth variable pipes 212 is assigned (120 kbps)/(two client PCs) = (64 kbps)/(one client PC). Thus, the bandwidth of 128 kbps shared by the client PC group 105 is equally used.

Bandwidth variable pipes which are disclosed on the homepage on the Internet of which the URL is http://info.iet.unipi.it/^{~}luigi/ip_dummynet/ may be used as the above bandwidth variable pipes.

Upon completion of the above assignment, the bandwidth management portion 103 sends an assignment completion notice to the address management portion 102 (at step S309). When the address management portion 102 receives the notice (at step S310), the address management portion 102 notifies the client PC 106 of an address pair 208 for the basic network designating portion 206 and the client PC 106 as a response packet according to the DHCP protocol responding to the address request packet according to the DHCP protocol, which has been received from the client PC 106 (at step S311). The client PC 106 knows the network configuration from the response packet of step S311 (at step S312). The client PC 106 makes a necessary configuration. As a result, the client PC 106 is connected to the Internet 104.

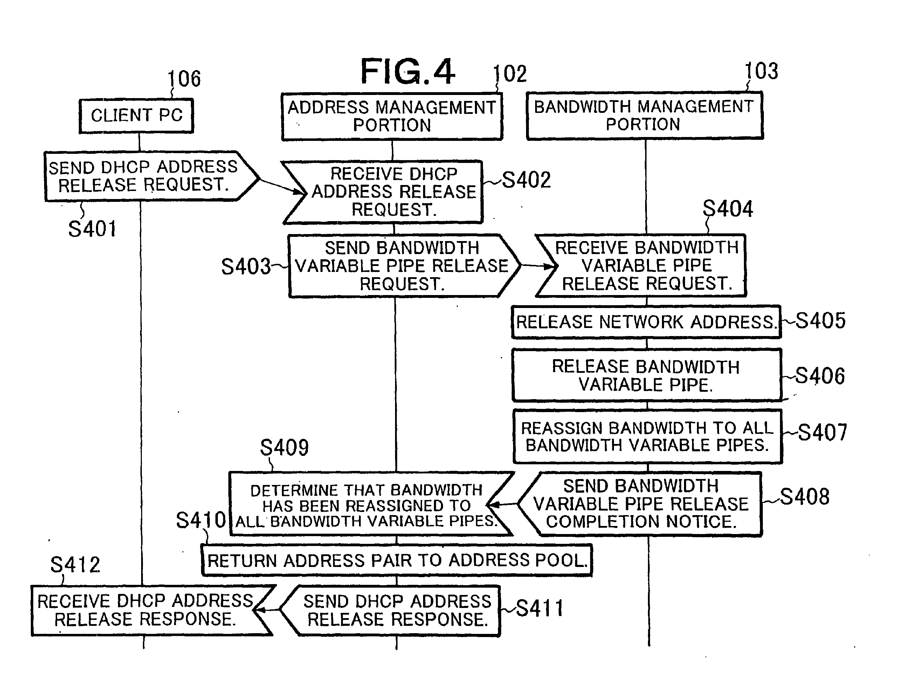

Next, with reference to Fig. 2 and Fig. 4, a process for releasing an IP address which has been lent to the client PC 106 as shown in Fig. 1 according to the DHCP protocol will be described. When the client PC 106 is going to shut down or be disconnected from the network, an address release packet is sent to the network according to the DHCP protocol so as to release the IP address which has been lent according to the DHCP protocol (at step S401).

The address management portion 102 receives the release packet, which has been sent at step S401, from the client PC 106 (at step S402). When the address management portion 102 has received the packet, the address management portion 102 sends a request to release the bandwidth variable pipe 212 from the client PC 106 (at step S403). When the bandwidth management portion 103 has received the request (at step S404), the bandwidth management portion 103 releases the inward gateway address 211 for the client PC 106 from the inward network interface 204.

Thereafter, the bandwidth management portion 103 releases the bandwidth variable pipe 212 from the client PC 106 (at step S406). Thereafter, the bandwidth management portion 103 reassigns the bandwidth to all the remaining bandwidth variable pipes 212 which have been assigned (at step S407). Thus, when the number of terminal units connected to the network is decreased, the bandwidth is reassigned so that the terminal units which are still connected to the network can equally use the bandwidth.

After the bandwidth management portion 103 has finished the above assignment, the bandwidth management portion 103 sends an assignment completion notice to the address management portion 102 (at step S408). When the address management portion 102 has received the notice (at step S409), the address management portion 102 returns the address pair 208 which has been assigned to the client PC 106 to the address pool 207 (at step S410).

Thereafter, the address management portion 102 sends an address release response packet according to the DHCP protocol to the client PC 106 (at step S411). When the client PC 106 has received the address release response packet from the address management portion 102, the client PC 106 finishes the use of the IP address which has been lent according to the DHCP protocol (at step S412).

As a general rule, it is preferred that the client PC 106 performs the process from steps S401 to S412 when the power of the client PC 106 is going to be turned off. However, if the power of the client PC 106 is unexpectedly turned off due to a breakdown or the like, that process may not be performed.

In order to cope well with such a situation, the client PC 106 performs the process as shown in Fig. 3 at intervals of a predetermined time period according to the DHCP protocol so as to reacquire the IP address which has been lent. If the client PC 106 has not performed the reacquiring process in a predetermined time period, the router 101 determines that the client PC 106 has been disconnected from the network. At that point, the router 101 performs the process from steps S403 to S410 and collects the IP address from the client PC 106 without waiting until the router 101 has received the DHCP address release request from the client PC 106.

As stated above, when a plurality of clients are connected to the Internet, a bandwidth is equally assigned to each client connected to the Internet. As a result, an uneven situation in which one client uses most of the bandwidth is prevented from taking place.

The process as shown in Figs. 3 and 4 can be implemented by a program. It is apparent that the process is implemented in such a manner that a computer (CPU) (not shown) reads the program and performs the process according to the program.

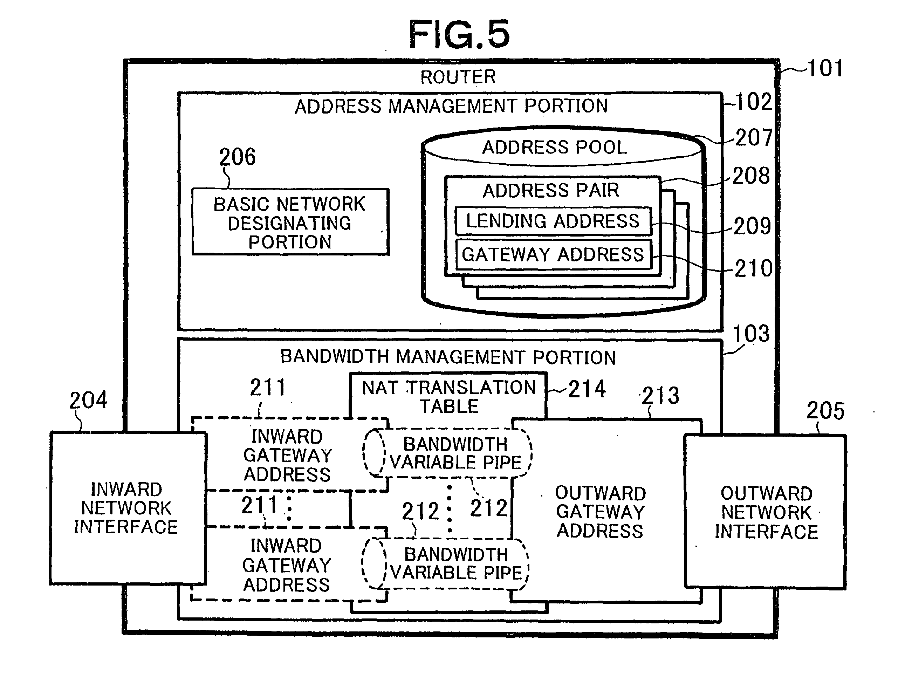

Next, with reference to the accompanying drawing, a second embodiment of the present invention will be described. Fig. 5 shows an internal structure of a router 101 according to the second embodiment of the present invention. In Fig. 5, the similar portions to those in Fig. 2 will be denoted by the similar reference numerals. The difference between the structure as shown in Fig. 5 and the structure as shown in Fig. 2 is in that an NAT translation table 214 is disposed in a bandwidth management portion 103.

Referring to Fig. 5, a router 101 comprises two programs of an address management portion 102 and a bandwidth management portion 103, an inward network interface 204, and an outward network interface 205. The inward network interface 204 connects the router 101 to a client PC group 105 as shown in Fig. 1. The outward network interface 205 connects the router 101 to the Internet 104.

The address management portion 102 includes a basic network designating portion 206 and an address pool 207. Described in the basic network designating portion 206 is a network configuration commonly used by the client PC group 105. Described in the address pool 207 are IP addresses and so forth assigned to the client PC group 105. The address pool 207 stores address pairs 208 as many as the number of client PCs of the client PC group 105 managed according to the DHCP. Each address pair 208 comprises a lending address 209 and a gateway address 210. A lending address 209 is assigned to each client PC of the client PC group 105. A gateway address 210 corresponds to a lending address 209.

The bandwidth management portion 103 comprises inward gateway addresses 211, bandwidth variable pipes 212, an outward gateway address 213, and an NAT translation table 214. The inward gateway addresses 211 are assigned to the inward network interface 204. The bandwidth of the bandwidth variable pipes 212 may be designated when IP packets pass through the bandwidth variable pipes 212. The outward gateway address 213 is assigned to the outward gateway address 213.

The inward gateway address 211 correspond to the gateway addresses 211 of the address pair 208 notified from the address management portion 102. When the address management portion 102 lends or collects an address according to the DHCP, the address management portion 102 adds or deletes a value of a gateway address 210 to or from the inward network interface. Thus, different inward gateway addresses 211 are simultaneously assigned to the inward network interface 204.

The bandwidth variable pipes 212 correspond to the inward gateway addresses 211 in one-to-one relation. The bandwidth variable pipes 212 connect the corresponding inward gateway addresses 211 and the outward gateway address 213.

The bandwidth management portion 103 configures routings of the inward gateway addresses 211 and the outward gateway address 213 so as to assure the connections of the inward gateway addresses 211 and the outward gateway address 213 to the Internet. The NAT translation table 214 performs a bi-directional translating process for translating IP addresses and TCP/UDP (Transmission Control Protocol/User Datagram Protocol) port numbers between the inward gateway addresses 211 and the outward gateway address 213.

Next, the NAT technology will be described. Generally, all units connected to the Internet should be assigned IP addresses which are unique in the world. Thus, an IP address assigned to a terminal unit of the client PC group 105 according to the first embodiment should be a global IP address. However, since global IP addresses are represented by 32 bits at the most. Therefore, shortage of the global IP addresses becomes a problem as the Internet becomes popular.

The currently most popular method for solving the problem is to apply the known NAT technology. The NAT technology is a technology which is used in a network concentrating unit such as a router which connects an intranet and the Internet. Normally, it is necessary to assign global IP addresses to units of the intranet. However, in the NAT technology, non-global IP addresses (private IP addresses), which are not unique IP addresses in the world, are assigned to units of the intranet. When the router relays IP packets from the units of the intranet, global IP addresses of the router are substituted for the private IP addresses of the intranet. However, if IP addresses are simply substituted, it is not determined whether IP packets are sent from a unit on the Internet side to the router or a unit on the intranet side. To solve such a problem, an address translation table is created in the router. Whenever a unit on the intranet side is connected to a unit on the Internet side, table items are created or referenced so as to relay the IP packets.

In the conventional NAT technology, not only the IP address table is used, but IP addresses and port numbers used for TCP/UDP connections are added as table items so as to improve the reliability of relaying IP packets.

When the NAT technology is used in such a manner, private IP addresses can be applied to client PCs. Thus, global IP address resources can be effectively used.

Next, a third embodiment of the present invention will be described. According to the first and second embodiments, the bandwidth management portion 103 reassigns the bandwidth to the client PC group 105 to which IP addresses have been assigned according to the DHCP protocol so that the bandwidth is equally assigned to each client PC of the client PC group 105. However, according to the third embodiment, client PCs are pre-assigned predetermined priorities. In other words, the client PCs are not equally assigned the bandwidth. For example, a more bandwidth is assigned to a client PC which the supervisor uses than the other client PCs.

Thus, with an assurance of some degree of fairness, a main client PC which a supervisor or the like uses can be assigned a more bandwidth with priority. As a result, the bandwidth can be managed corresponding to a special use.

Next, a fourth embodiment of the present invention will be described. A bandwidth management portion 103 performs a process for changing a bandwidth depending on a TCP/UDP port number through which a packet passes.

Generally, Internet applications use communication protocols which are identified by TCP/UDP port numbers (for example, SMTP (Simple Mail Transfer Protocol) protocol for E mail uses TCP port number 25, POP (Post Office Protocol) 3 protocol uses TCP port number 110, HTTP (Hyper Text Transfer Protocol) protocol for Web uses generally number 80, and so forth). A connection between two units is managed with a combination of four numbers which are IP addresses and port numbers of the two units, namely
{(IP address and port number on intranet side), (IP address and port number on Internet side)}

Thus, for example, a bandwidth can be controlled in such a manner that a less bandwidth is assigned to the SMTP protocol and that a sufficient bandwidth is assigned to the HTTP protocol. In that case, since a communication from the intranet to the Internet and a communication from the Internet to the intranet can be distinguished by upward and downward directions. Therefore, a bandwidth can be controlled in such a manner that a sufficient bandwidth is assigned to downward HTTP protocol and a less bandwidth is assigned to upward HTTP protocol.

Thus, as the result of this embodiment, when the user frequently uses the HTTP, a more bandwidth can be assigned to the HTTP. As a result, the bandwidth can be effectively managed.

### Industrial Applicability

According to the present invention, when a plurality of clients are connected to the Internet through a router, a communication bandwidth can be equally shared by the clients.

## Claims

1. A router apparatus for controlling a bandwidth, said router apparatus being disposed between a network and a plurality of clients under an environment in which the bandwidth for connection with a network is shared by a plurality of clients, said router apparatus comprising:
address management means for assigning an address to a client in response to a network connection request issued from the client; and
bandwidth management means for reassigning the bandwidth to the assigned address and addresses assigned to the other clients.

2. The router apparatus as set forth in claim 1,
wherein the bandwidth management means adopts a bandwidth reassigning method which equally assigns the bandwidth.

3. The router apparatus as set forth in claim 1,
wherein the bandwidth management means adopts a bandwidth reassigning method which reassign the bandwidth in accordance with a prescribed priority.

4. The router apparatus as set forth in claim 1,
wherein the network is the Internet, and
wherein the address management means uses private IP addresses as addresses assigned to the clients, and
wherein the bandwidth management means has an address translation table for bi-directionally translating the private IP addresses and Internet's global IP addresses.

5. The router apparatus as set forth in claim 1,
wherein the network is the Internet, and
wherein the bandwidth management means assigns different bandwidths to different Internet applications.

6. The router apparatus as set forth in claim 5,
wherein the bandwidth management means assigns different bandwidths to different port numbers through which communication data packets pass.

7. A bandwidth controlling method in a router apparatus for controlling a bandwidth, said router apparatus being disposed between a network and a plurality of clients under an environment in which the bandwidth for connection with a network is shared by a plurality of clients, said method comprising:
address management step for assigning an address to a client in response to a network connection request issued from the client; and
bandwidth management step for reassigning the bandwidth to the assigned address and addresses assigned to the other clients.

8. The bandwidth controlling method as set forth in claim 7,
wherein the bandwidth management step adopts a bandwidth reassigning method which equally assigns the bandwidth.

9. The bandwidth controlling method as set forth in claim 7,
wherein the bandwidth management step adopts a bandwidth reassigning method which reassign the bandwidth in accordance with a prescribed priority.

10. The bandwidth controlling method as set forth in claim 7,
wherein the network is the Internet, and
wherein the address management step uses private IP addresses as addresses assigned to the clients, and
wherein the bandwidth management step performs bandwidth control with reference to an address translation table for bi-directionally translating the private IP addresses and Internet's global IP addresses.

11. The bandwidth controlling method as set forth in claim 7,
wherein the network is the Internet, and
wherein the bandwidth management step assigns different bandwidths to different Internet applications.

12. The bandwidth controlling method as set forth in claim 11,
wherein the bandwidth management step assigns different bandwidths to different port numbers through which communication data packets pass.

13. A record medium on which a program is recorded for causing a computer to execute a bandwidth controlling method in a router apparatus for controlling a bandwidth, said router apparatus being disposed between a network and a plurality of clients under an environment in which the bandwidth for connection with a network is shared by a plurality of clients, said method comprising:
address management step for assigning an address to a client in response to a network connection request issued from the client; and
bandwidth management step for reassigning the bandwidth to the assigned address and addresses assigned to the other clients.

14. The record medium on which a program is recorded as set forth in claim 13,
wherein the bandwidth management step adopts a bandwidth reassigning method which equally assigns the bandwidth.

15. The record medium on which a program is recorded as set forth in claim 13,
wherein the bandwidth management step adopts a bandwidth reassigning method which reassign the bandwidth in accordance with a prescribed priority.

16. The record medium on which a program is recorded as set forth in claim 13,
wherein the network is the Internet, and
wherein the address management step uses private IP addresses as addresses assigned to the clients, and
wherein the bandwidth management step performs bandwidth control with reference to an address translation table for bi-directionally translating the private IP addresses and Internet's global IP addresses.

17. The record medium on which a program is recorded as set forth in claim 13,
wherein the network is the Internet, and
wherein the bandwidth management step assigns different bandwidths to different Internet applications.

18. The record medium on which a program is recorded as set forth in claim 17,
wherein the bandwidth management step assigns different bandwidths to different port numbers through which communication data packets pass.
